# FASCICULE DE BREVET EUROPEEN

(11) **EP 1 013 491 B1**
(45) Date de publication et mention de la délivrance du brevet: **01.09.2004**
(21) Numéro de dépôt: 99125618.1
(22) Date de dépôt: 22.12.1999
(51) Int. Cl.: B60H 1/00

(54) **Dispositif de chauffage et/ou climatisation de véhicule automobile à mixage d'air amélioré**
Fahrzeugklimaanlage mit verbesserter Luftmischung
Vehicle heating and/or air conditioning with improved air mixing

(30) Priorité: 22.12.1998 FR 9816249
(43) Date de publication de la demande: 28.06.2000
(73) Titulaire: VALEO CLIMATISATION, 78321 La Verrière (FR)
(72) Inventeur: Loup, Didier, 78310 Maurepas (FR); Auvity, Michel, 78140 Velizy (FR); Queinnec, Jean-Yves, 78990 Elancourt (FR); Vincent, Philippe, 28230 Epernon (FR)

(56) Documents cités:
- DE-C- 4 214 862
- FR-A- 2 703 305
- US-A- 4 683 913

## Description

L'invention se rapporte aux dispositifs de chauffage et/ou climatisation des véhicules automobiles.

Elle concerne plus particulièrement un dispositif comprenant un conduit d'air froid, un conduit d'air chaud logeant un radiateur de chauffage, une chambre de mixage communiquant avec des sorties d'air respectives desdits conduits, et des moyens de mixage propres à contrôler lesdites sorties d'air en proportion choisie pour régler la température de l'air dans la chambre de mixage.

On connaît déjà des dispositifs de ce type permettant de mélanger, dans une proportion réglée, un flux d'air froid provenant du conduit d'air froid et un flux d'air chaud provenant du conduit d'air chaud pour obtenir, dans la chambre de mixage, un flux d'air à température ajustée.

Ce flux d'air est ensuite réparti dans l'habitacle du véhicule par des moyens de distribution appropriés, comprenant des conduits aboutissant à différentes buses disposées en des endroits choisis de l'habitacle.

Généralement, les moyens de mixage comprennent un volet de mixage, du type papillon, monté pivotant autour d'un axe situé à proximité du radiateur de chauffage et présentant deux ailes propres à contrôler respectivement les sorties des conduits d'air froid et d'air chaud.

Un tel volet peut se débattre de l'une à l'autre de deux positions extrêmes comprenant une position "chaud" (en laquelle la sortie du conduit d'air froid est fermée et la sortie du conduit d'air chaud est ouverte) et une position "froid" (en laquelle la sortie du conduit d'air chaud est fermée et la sortie du conduit d'air froid est ouverte).

Un tel dispositif, avec volet de mixage du type papillon, a notamment pour inconvénient que, lorsque le volet passe de la position "chaud" à la position "froid", de l'air froid pénètre dans la chambre de mixage à partir d'une région de la sortie du conduit d'air froid qui se trouve près d'un bord libre du volet papillon. Cette région particulière se trouve précisément à l'opposé de la région de la sortie du conduit d'air chaud, par laquelle le flux d'air chaud pénètre dans la chambre de mixage, c'est-à-dire près d'un bord opposé du volet papillon. Il en résulte que le flux d'air et le flux d'air chaud ont tendance à se stratifier, si bien que leur mélange ne peut se faire qu'à une distance éloignée du radiateur de chauffage, ce qui oblige à augmenter le volume de la chambre de mixage, et donc du dispositif.

Un tel dispositif est connu de US-A-4 683 913, qui illustre le préambule de la revendication 1.

L'invention a essentiellement pour but de surmonter un tel inconvénient.

Elle vise donc à favoriser la rencontre et le mélange efficace du flux d'air froid et du flux d'air chaud dans une zone plus proche du radiateur de chauffage, de manière à dégager de la place, en aval du radiateur de chauffage, pour la distribution de l'air.

L'invention propose à cet effet, un dispositif de chauffage et/ou climatisation de véhicule automobile, du type défini dans le préambule de la revendication 1 dans lequel le volet (144) de type tambour comporte une paroi d'obturation (148) qui présente au moins un évidemment (156, 160) pour permettre le passage d'un flux d'air froid (F1) vers la sortie (26) du conduit d'air chaud (26), tel que défini par la revendication 1.

Ainsi, le flux d'air froid et le flux d'air chaud sont mélangés de manière optimale et, de ce fait, la taille de la chambre de mixage peut être diminuée par rapport aux dispositifs connus.

Avantageusement, le volet de type tambour (144) est un volet unique qui, dans la position "chaud", ferme la sortie du conduit d'air froid et, dans la position "froid", ferme la sortie du conduit d'air chaud. La paroi (148) du volet est une paroi sensiblement cylindrique qui s'étend entre deux bords opposés (154, 156). Le (ou les) évidemment(s) formé(s) dans la paroi débouche(nt) à proximité des bords opposés de telle sorte que, lorsque le volet est déplacé de la position "chaud" à la position "froid", un flux d'air froid peut passer au travers de l'évidement pour venir rencontrer un flux d'air chaud.

Avantageusement, le dispositif comporte au moins un volet auxiliaire propre à fermer le conduit d'air chaud lorsque le volet unique est en position "froid".

En ce cas, il est particulièrement avantageux de prévoir deux volets auxiliaires du type papillon dont les mouvements sont coordonnés.

Dans la description qui suit, faite à titre d'exemple, on se réfère aux dessins annexés, sur lesquels :
- la figure 1 est une vue en coupe du dispositif selon l'invention, représenté en position chaud ;
- la figure 2 est une vue analogue à la figure 1, dans laquelle le dispositif est représenté en position de mixage;
- la figure 3 est une vue en perspective du volet unique du dispositif des figures 1 et 2;
- la figure 4 est une vue en coupe selon le plan XXXI-XXXI de la figure 3;
- la figure 5 est une vue en coupe selon la XXXII-XXXI de la figure 4; et
- la figure 6 est une vue analogue à la figure 4 dans une variante de réalisation ; et
- la figure 7 est une vue analogue à la figure 2 dans une variante de réalisation.

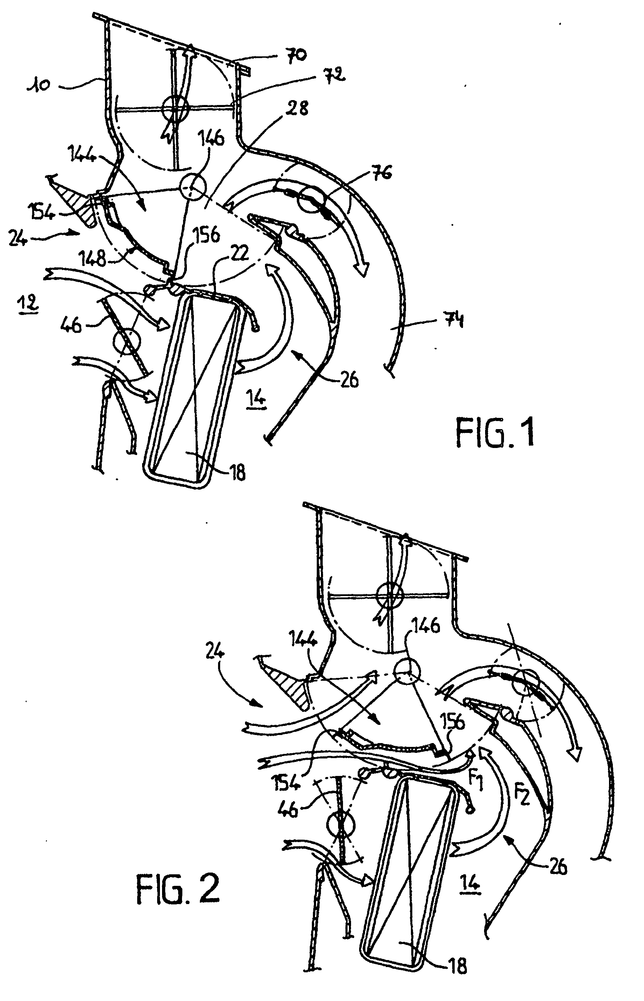

On se réfère à la figure 1 qui représente un dispositif de chauffage et/ou climatisation de l'habitacle d'un véhicule automobile. Ce dispositif comprend un boîtier 10 délimitant un conduit d'air froid 12 et un conduit d'air chaud 14 tous deux alimentés en air froid (flèche F1) à partir d'une entrée commune.

Le conduit d'air chaud 14, encore appelé conduit de réchauffage d'air, loge un radiateur de chauffage 18 propre à être parcouru par un liquide chaud, habituellement le liquide servant au refroidissement du moteur du véhicule.

Dans l'exemple, le radiateur 18 est placé dans une position sensiblement verticale en dessous d'une cloison 22 qui contribue à délimiter, à l'intérieur du boîtier 10, deux sorties d'air 24 et 26 correspondant respectivement au conduit d'air froid 12 et au conduit d'air chaud 14. Ces deux sorties débouchent sur une chambre de mixage 28 qui est en communication avec différentes buses de sortie d'air (non représentées) réparties dans l'habitacle du véhicule.

Lorsque le volet est dans la position "chaud", sa paroi d'obturation ferme complètement la sortie 24 du conduit 12 et s'étend alors entre la cloison 22 et la paroi 36, si bien que le flux d'air balaye le radiateur 18.

Sur la figure 1, on a représenté un conduit de sortie 70 communiquant avec la chambre de mixage 28 et contrôlé par un volet 72 pour alimenter des buses de dégivrage et d'aération du véhicule, ainsi qu'un autre conduit de sortie 74, appelé "conduit pieds", contrôlé par un volet 76.

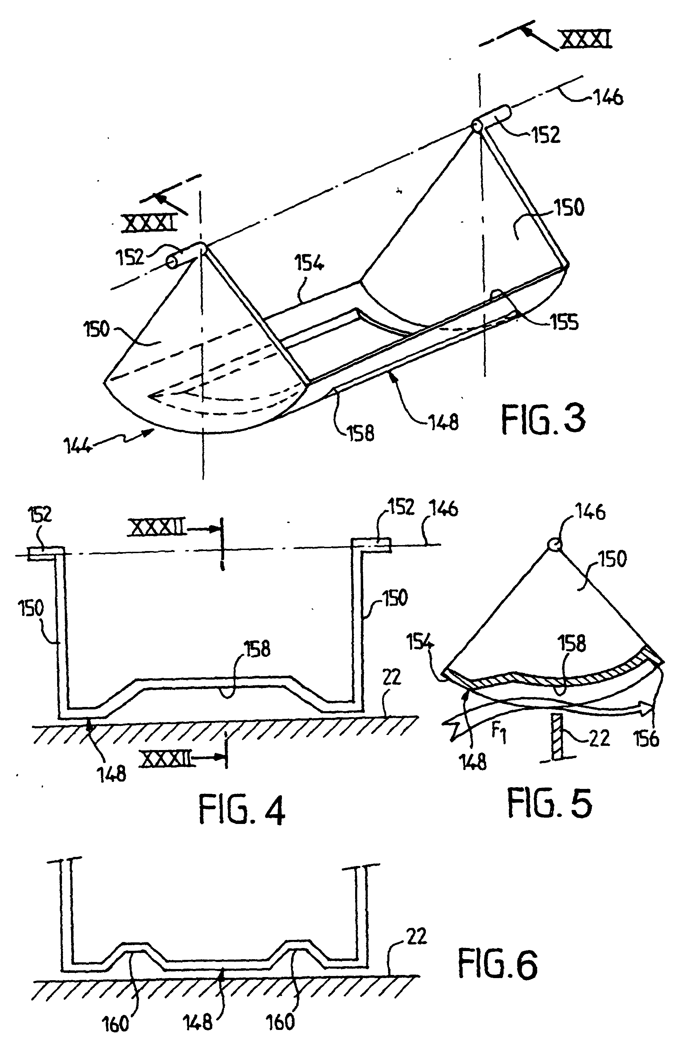

Le dispositif des figures 1 et 2 comprend un volet unique 144 de type tambour monté pivotant autour d'un axe 146. Ce volet possède une paroi 148 de forme générale cylindrique montée entre deux flasques 150 pourvus de pivots respectifs 152 formant l'axe 146 (figures 3 et 4). La paroi 146 tourne sa concavité du côté opposé aux sorties respectives 24 et 26 du conduit d'air froid 12 et du conduit d'air chaud 14. Le volet peut pivoter entre une position "chaud" (représentée en trait plein) en laquelle la paroi 148 ferme la sortie du conduit d'air froid et une position "froid" (représentée en trait interrompu) en laquelle la paroi 148 ferme la sortie du conduit d'air chaud (figure 1).

Le dispositif peut comprendre en outre un volet auxiliaire 46 par exemple de type papillon ou de type drapeau, logé dans le conduit d'air chaud 14, en amont du radiateur de chauffage 18.

La paroi 148 est généralement cylindrique et s'étend entre deux bords opposés 154 et 156 qui constituent deux génératrices de la paroi. Dans la position "chaud" (figure 1), le bord 154 vient en contact étanche avec le boîtier et le bord 156 avec la paroi de séparation 22, qui est située immédiatement au-dessus du radiateur de chauffage 28. Il est à noter que la paroi 148 est recouverte en partie, dans la région du bord 154, par un cache 157 faisant partie du boîtier. Ainsi tant que le volet se trouve dans la position "chaud" ou dans une position intermédiaire proche de cette position "chaud", pour laquelle le bord 154 coopère à étanchéité avec le cache 157, l'air froid ne peut accéder à la chambre de mixage.

La paroi 148 est conformée pour présenter un évidement 158 (figures 3, 4 et 5) qui s'étend en arc de cercle et débouche à proximité des bords opposés 154 et 156. Dans la forme de réalisation des figures 3 et 4, la paroi comporte un seul évidement 158.

On comprendra que, lorsque le volet 144 est dans une position intermédiaire entre les positions "froid" et "chaud", l'évidement 158 constitue un passage pour le flux d'air froid F1, comme montré aux figures 2 et 5. Ce flux peut passer entre la partie en retrait de la paroi 148 et la paroi de séparation 22.

Il en résulte que, lorsque le volet passe de la position "chaud" à la position "froid", il commence par dégager un passage d'air qui permet au flux d'air froid F1 de rencontrer le flux d'air chaud F2 dans une région immédiatement au-dessus du radiateur 18 (figure 2). Bien entendu, le dégagement de ce passage d'air commence lorsque le bord 154 de la paroi 148 a cessé de coopérer avec le cache 157.

Dans la forme de réalisation de la figure 6, la paroi 148 comporte deux évidements 160 constituant deux passages d'air espacés, le principe de fonctionnement étant le même que précédemment.

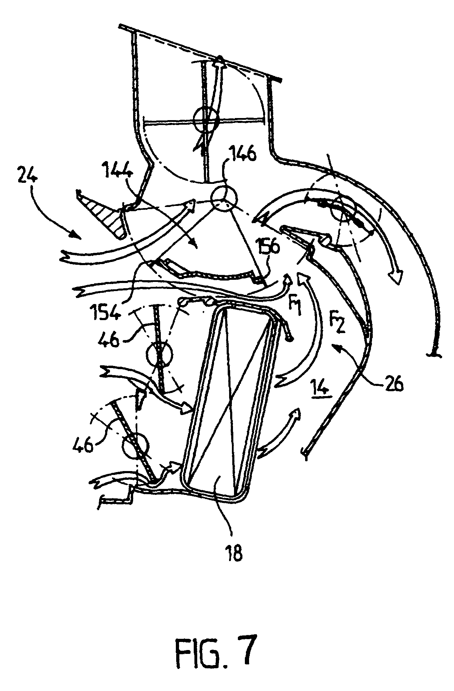

La forme de réalisation de la figure 7 s'apparente étroitement à celle des figures 1 et 2, si ce n'est que le dispositif comporte deux volets auxiliaires 46 du type papillon, au lieu d'un seul volet. Ces deux volets sont logés également dans le conduit d'air chaud 14 et en amont du radiateur de chauffage 18. Le fait de prévoir deux volets au lieu d'un seul volet permet, pour un encombrement égal par ailleurs, de contrôler une section de passage plus grande.

Les deux volets 46 ont des mouvements coordonnés. C'est ainsi qu'ils peuvent s'ouvrir selon une loi définie, l'un des volets s'ouvrant plus ou moins rapidement que l'autre. Ceci permet par exemple d'assurer une progressivité d'ouverture, ou encore de favoriser l'écoulement des condensats en position presque "tout froid". Dans ce dernier cas, on ouvre d'abord le volet 46 placé en position supérieure, puis le volet 146 placé en position inférieure.

Ainsi, dans tous les modes de réalisation décrits précédemment, le dispositif comprend des moyens de mixage qui permettent, lorsque l'on passe de la position "chaud" à la position "froid", de diriger un flux d'air froid en face d'un flux d'air chaud pour assurer leur mélange dans une région proche de l'échangeur de chaleur, ce qui permet de diminuer le volume de la chambre de mixage, et donc l'encombrement global du dispositif.

Bien entendu, l'invention n'est pas limitée aux formes de réalisation décrites précédemment à titre d'exemple et s'étend à d'autres variantes de réalisation.

On comprendra que, dans le cadre de l'invention, lorsque plusieurs volets sont utilisés, il est possible d'utiliser des volets de même type ou de types différents.

## Revendications

1. Dispositif de chauffage et/ou climatisation de véhicule automobile, comprenant un conduit d'air froid (12), un conduit d'air chaud (14) logeant un radiateur de chauffage (18), une chambre de mixage (28) communiquant avec des sorties d'air respectives (24, 26) desdits conduits, et des moyens de mixage propres à contrôler lesdites sorties d'air en proportions choisies pour régler la température de l'air dans la chambre de mixage (28), au moins un moyen de mixage étant constitué par un volet (144) de type tambour comportant une paroi d'obturation (148) qui, dans la position "chaud", ferme la sortie du conduit d'air froid, et, dans la position "froid", ferme la sortie du conduit d'air chaud, et de sorte que, lorsque le volet est déplacé de la position "chaud" à la position "froid", un premier flux d'air froid pénètre dans la chambre de mixage (28) à partir d'une région de la sortie du conduit d'air froid qui se trouve près du bord libre du volet de mixage
**caractérisé en ce que** la paroi (148) du volet présente au moins un évidement (156 ; 160) de telle sorte que, lorsque le volet est déplacé de la position "chaud" à la position "froid", un second flux d'air froid (F1) peut passer au travers de l'évidement (158 ; 160) pour venir rencontrer un flux d'air chaud (F2) dans une zone proche du radiateur de chauffage (18).

2. Dispositif selon la revendication 1, **caractérisé en ce que** les moyens de mixage comprennent un volet de mixage unique.

3. Dispositif selon la revendication 2, dans lequel la paroi (148) du volet est une paroi sensiblement cylindrique qui s'étend entre deux bords opposés (154, 156) du volet, les évidements (156 ; 160) formés dans la paroi et débouchant à proximité des bords opposés (154, 156)

4. Dispositif selon la revendication 3, **caractérisé en ce qu'**il comprend au moins un volet auxiliaire (46) propre à fermer le conduit d'air chaud (14) lorsque le volet unique (144) est en position "froid".

5. Dispositif selon la revendication 4, **caractérisé en ce qu'**il comprend deux volets auxiliaires (46) du type papillon dont les mouvements sont coordonnés.

## Patentansprüche

1. Heiz- und/oder Klimatisierungsvorrichtung für ein Kraftfahrzeug, die eine Kaltluftleitung (12), eine Warmluftleitung (14), in der sich ein Heizkörper (18) befindet, eine Mischkammer (28), die mit Luftaustritten (24, 26) der Leitungen in Verbindung steht, und Mischeinrichtungen aufweist, die in der Lage sind, die Luftaustritte in gewählten Anteilen zu steuern, um die Temperatur der Luft in der Mischkammer (28) zu regeln, wobei mindestens eine Mischeinrichtung aus einem trommelartigen Schieber (144) besteht, der eine Verschlusswand (148) aufweist, die in der Stellung "warm" den Ausgang der Kaltluftleitung schließt und in der Stellung "kalt" den Ausgang der Warmluftleitung schließt, und derart, dass, wenn der Schieber von der Stellung "warm" in die Stellung "kalt" verschoben wird, ein Kaltluftstrom ausgehend von einem Bereich des Ausgangs der Kaltluftleitung, der sich in der Nähe des freien Rands des Mischschiebers befindet, in die Mischkammer (28) eindringt, **dadurch gekennzeichnet, dass** die Wand (148) des Schiebers mindestens eine Aussparung (156; 160) aufweist, derart, dass, wenn der Schieber von der Stellung "warm" in die Stellung "kalt" verschoben wird, ein Kaltluftstrom (F1) durch die Aussparung (158; 160) fließen kann, um in einer Zone nahe dem Heizkörper (18) auf einen Warmluftstrom (F2) zu treffen.

2. Vorrichtung nach Anspruch 1, **dadurch gekennzeichnet, dass** die Mischeinrichtungen aus einem einzigen Mischschieber bestehen.

3. Vorrichtung nach Anspruch 2, bei der die Wand (148) des Schiebers eine im wesentlichen zylindrische Wand ist, die sich zwischen zwei gegenüberliegenden Rändern (154, 156) des Schiebers erstreckt, wobei die in der Wand ausgebildeten Aussparungen (156; 160) in der Nähe der gegenüberliegenden Ränder (154, 156) münden.

4. Vorrichtung nach Anspruch 3, **dadurch gekennzeichnet, dass** sie mindestens einen Hilfsschieber (46) aufweist, der die Warmluftleitung (14) schließen kann, wenn der einzige Schieber (144) in der Stellung "kalt" ist.

5. Vorrichtung nach Anspruch 4, **dadurch gekennzeichnet, dass** sie zwei Hilfsschieber (46) vom Typ Drosselklappe aufweist, deren Bewegungen koordiniert sind.

## Claims

1. Motor-vehicle heating and/or air-conditioning unit, comprising a cold air duct (12), a hot air duct (14) housing a heating radiator (18), a mixing chamber (28) communicating with the respective air outlets (24, 26) of the said ducts, and mixing means suitable for controlling the air from the said air outlets in chosen proportions in order to regulate the temperature of the air in the mixing chamber (28), at least one mixing means consisting of a flap (144) of the drum type, having a closure wall (148) which, in the "hot" position, closes off the outlet of the cold air duct and, in the "cold" position, closes off the outlet of the hot air duct, and in such a way that, when the flap is moved from the "hot" position to the "cold" position, a stream of cold air penetrates the mixing chamber (28) from a region of the outlet of the cold air duct that lies close to the free edge of the mixing flap, **characterized in that** the wall (148) of the flap has at least one recess (156; 160) in such a way that, when the flap is moved from the "hot" position to the "cold" position, a stream of cold air (F1) can pass through the recess (158; 160) in order to encounter a stream of hot air (F2) in a region close to the heating radiator (18).

2. Unit according to Claim 1, **characterized in that** the mixing means comprise a single mixing flap.

3. Unit according to Claim 2, in which the wall (148) of the flap is an approximately cylindrical wall that extends between two opposed edges (154, 156) of the flap, the recesses (156; 160) being formed in the wall and emerging in the vicinity of the opposed edges (154, 156).

4. Unit according to Claim 3, **characterized in that** it includes at least one auxiliary flap (46) suitable for closing off the hot air duct (14) when the single flap (144) is in the "cold" position.

5. Unit according to Claim 4, **characterized in that** it includes two auxiliary flaps (46) of the butterfly type, the movements of which are coordinated.
